# EUROPÄISCHE PATENTSCHRIFT

(11) **EP 0 786 486 B1**
(45) Veröffentlichungstag und Bekanntmachung des Hinweises auf die Patenterteilung: **19.04.2000**
(21) Anmeldenummer: 97101102.8
(22) Anmeldetag: 24.01.1997
(51) Int. Cl.: C08G 69/20, C08G 69/18

(54) **Flüssiges Mehrkomponentensystem für die anionische Lactampolymerisation**
Liquid multicomponent system for the anionic lactam polymerisation
Système liquide à plusieurs éléments pour la polymérisation anionique de lactame

(30) Priorität: 25.01.1996 DE 19603305
(43) Veröffentlichungstag der Anmeldung: 30.07.1997
(73) Patentinhaber: EMS-INVENTA AG, 8002 Zürich (CH)
(72) Erfinder: Schmid, Eduard, Dr. sc. nat., 7402 Bonaduz (CH); Eder, Roman, 70794 Filderstadt (DE)
(74) Vertreter: Hotz, Klaus, Dipl.-El.-Ing./ETH

(56) Entgegenhaltungen:
- EP-A- 0 438 762
- DE-A- 1 495 132
- DE-A- 1 495 848
- DE-A- 1 520 605
- DE-A- 2 035 733
- DE-A- 2 230 732
- US-A- 3 575 938

## Beschreibung

Die vorliegende Erfindung betrifft ein bei Raumtemperatur flüssiges Mehrkomponentensystem für die anionische Lactampolymerisation.

Polyamide werden gemäss dem relevanten Stand der Technik meist nach der Methode der sogenannten hydrolytischen Polymerisation aus Lactamen in der Schmelze bei Temperaturen von ca. 200 bis 320°C hergestellt, bei der zur Ringöffnung des Lactams oft eine Druckphase unter Wasserzusatz vorgeschaltet ist. Diese Reaktion verläuft langsam. Das Reaktionsprodukt, bevorzugt ein Granulat, wird in einem Nachfolgeschritt, z.B. im Spritzgussoder Extrusionsverfahren, zu Gebrauchsgegenständen umgeformt.

Auch starke Basen, die z.B. zur Bildung von Metall-Lactamat führen, können die Umwandlung von Lactam zum Polyamid bewirken. Die entsprechende Polymerisationsreaktion verläuft langsam und wurde abgelöst durch die aktivierte anionische Lactampolymerisation, bei der die Reaktion stark beschleunigt ist und die Polymerisationstemperatur unter den Polymerschmelzpunkt abgesenkt werden kann. Bei diesem Verfahren werden der Lactamschmelze Katalysator und Aktivator getrennt zugefügt.

Üblicherweise liegt dabei der Katalysator als Feststoff, z.B. als Alkali- oder als ErdalkaliLactamat vor. Auch viele der aktivierenden sogenannten Cokatalysatoren wie z.B. Carbodiimide und verkappte Isocyanate, sind Feststoffe. Der Nachteil der freien Isocyanate, von denen viele flüssig sind, ist ihre hohe Toxizität.

Die anionische Lactampolymerisation und die aktivierte anionische Lactampolymerisation sowie alle Aspekte der Polyamidsynthese und die entsprechenden Anwendungen sind z.B. beschrieben im Kunststoffhandbuch Band VI, Polyamide, C.Hanser Verlag, München.

Die aktivierte anionische Lactampolymerisation wird im allgemeinen zur Herstellung von sog. Gussteilen oder von grossvolumigem Halbzeug, wie Profilen, bevorzugt nach dem sogenannten 2-Topfverfahren durchgeführt.
Dabei werden volumengleiche, den Katalysator bzw. den Cokatalysator enthaltende Lactamschmelzen hergestellt, zusammengefügt und intensiv vermischt. Dadurch wird die Polymerisation gestartet, und die Schmelze kann unmittelbar danach, z.B. im sogenannten Monomerguss-Verfahren, zum Fertigteil verarbeitet werden.
Dazu muss möglichst darauf geachtet werden, dass
- die Lactamschmelzen wasser- und sauerstofffrei sind,
- die Misch- und Verarbeitungsschritte unter Inertgas erfolgen und
- die aktivierte Schmelze sehr rasch verarbeitet wird,
da sie nur eine beschränkte Verarbeitungszeit besitzt.

Um die rasche und homogene Verteilung des anionischen Katalysators, z.B. von Magnesium- oder Natrium-Lactamat, in der Lactamschmelze zu erleichtern, wurden sogenannte Flüssigkatalysatorsysteme entwickelt.

In der ***DE-A-22 30 732*** wird dabei auf die Schwierigkeiten eingegangen, welche die Zugabe von Katalysator in fester Form, z.B. von Metall-Lactamat, zur aktivatorhaltigen Lactamschmelze verursacht. Sind Lösung und gleichmässiges Verteilen nicht gewährleistet, entsteht ein inhomogenes Polymer.

In der ***DE-A-14 95 132*** wird zur Problemlösung eine bei 90°C flüssige, lagerfähige Lösung von Alkali-Lactamat in Lactam vorgeschlagen, die zusätzlich 0,3 bis 5,0 Gew.% eines schwerflüchtigen Amins enthält.

Eine Katalysatorlösung von Metall-Lactamat in einem N -disubstituierten Carbonsäureamid insbesondere in N-Methylpyrrolidon, ist in der ***US-A-3,575,938*** beschrieben. Die verbesserte Zugabe und Verteilung dieser Katalysatorlösung in eine aktivierte Lactamschmelze erlaubt auch die Herstellung mineralgefüllter Produkte.

Nach der Lehre der ***DE 22 30 732*** muss die das Verfahren störende Krustenbildung, die Katalysatorlösungen aus Alkali-Lactamat in 2-Pyrrolidon rasch zeigen, durch Zugabe höherer Alkohole verhindert werden.

In der ***EP-A-0 438 762*** sind Katalysatorlösungen mit hoher Lagerstabilität auch bei tiefen Temperaturen beschrieben, die einen raschen Umsatz ermöglichen und zu Polyamid mit relativ niedrigem Restgehalt an Extrakt führen. Sie bestehen aus Lactam, z.B. 2-Pyrrolidon, speziellen Glykolen, Kohlenwasserstoffen und enthalten gegebenenfalls Amin.

Im zitierten Stand der Technik müssen nach wie vor zur Durchführung der anionischen Lactampolymerisation der Aktivator und die Lösung des Katalysators immer separat verwendet werden.
Eine bevorzugte Vorgehensweise dabei ist, dass man zunächst eine homogene Lösung des Aktivators und gegebenenfalls weiterer Zusätze in einer wasserfreien Lactamschmelze herstellt und in einem weiteren Verfahrensschritt zur Durchführung der Polymerisationsreaktion die Katalysatorlösung zufügt und in der Schmelze homogen verteilt.

Die wesentlichen Nachteile der Verfahren des Standes der Technik liegen somit in der Notwendigkeit
- der getrennten Zugabe von Aktivator und Katalysatorlösung zur Lactamschmelze in diskontinuierlichen Verfahren, bzw.
- der Verwendung von zwei Vorratsbehältern, nämlich je einen Behälter für die aktivierte beziehungsweise für die katalysatorhaltige Lactamschmelze, die beide nur eine beschränkte Lagerdauer besitzen.

Die Aufgabe der vorliegenden Erfindung ist es, die Nachteile des Standes der Technik durch ein geeignetes Katalysator / Aktivator-System zu überwinden und die Lactampolymerisation dadurch zu vereinfachen.

Diese Aufgabe wird durch folgendes bei Raumtemperatur flüssige, Mehrkomponentensystem für die anionische Lactampolymerisation und seine Verwendung zur Auslösung der Lactampolymerisation gelöst:

Bei Raumtemperatur flüssiges Mehrkomponentensystem für die anionische Lactampolymerisation bestehend aus dem Umsetzungsprodukt von
a) 30 bis 80 Gew.- Teilen mindestens einer solvatisierend wirkenden Komponente,
b) 5 bis 40 Gew.- Teilen mindestens eines Lactamats,
c) 5 bis 40 Gew.- Teilen mindestens eines Aktivators welche sich auf 100 Teile ergänzen und
d) zusätzlich aus 0 bis 50 Gew.- Teilen an Zusätzen,
wobei die Komponente a) eine aliphatische, cycloaliphatische und/oder aromatische Kohlenwasserstoffverbindung mit Heteroatomen oder Heterogruppen als solvatisierend wirkende Strukturelemente aus der Gruppe - CONR-, R'R"N- CO- NO-, - -O-, RR'NCONR"R"', phenolisches - OH, - S-, - SO-, - SO2, - NRR', P(- OR)3, PO(- OR)3, - CO- und - COOR, in denen R, R', R", R"' und R"" gleiche oder unterschiedliche Reste mit mindestens einem C- Atom sind, wobei das phenolische OH soweit sterisch abgeschirmt ist, dass es keine Kondensationsreaktion mehr eingehen kann, sowie Moleküle mit HALS- Struktur, Butyro- und Valerolactam, ist.

Sie wird insbesondere gelöst, durch ein flüssiges Mehrkomponentensystem, das Aktivator und Katalysator zugleich enthält, dadurch die getrennte Verwendung von Aktivator und Katalysator unnötig macht und der aktivierten anionischen Laktampolymerisation eine wesentliche Erweiterung der Anwendungen, der Rezepturen und der Verfahren sichert.

Im erfindungsgemässen Mehrkomponentensystem haben sich aliphatische, cycloaliphatische oder aromatische Kohlenwasserstoff-Verbindungen mit Heteroatomen oder nicht kondensationsfähigen Heterogruppen, als gleichzeitig auf Katalysator und Aktivator, auch Cokatalysator genannt, solvatisierend wirkende Strukturelemente, als geeignet erwiesen.

Solche Heteroatome oder Heterogruppen sind zum Beispiel -CONR-, R'R"N-CO-OR"", -NO-, -O-, RR'NCONR"R"', phenolisches-OH, -S-, -SO-, -SO2, -NRR', P(-OR)₃, PO(-OR)₃, -CO- und -COOR, in denen R, R', R", R"' und R"" gleiche oder unterschiedliche Reste mit mindestens einem C-Atom sind, wobei das phenolische -OH soweit sterisch abgeschirmt ist, dass es keine Kondensationsreaktion mehr eingehen kann. N, S, P und O sind als Heteroatome bevorzugt.

Die Kohlenwasserstoff-Verbindung a) enthält bevorzugt mehrere dieser solvatisierend wirkenden Strukturelemente.

Besonders bevorzugt sind Kohlenwasserstoff-Verbindungen, in denen zwei an den Heteroatomen oder Heterogruppen angeordnete Reste R', R", R"' oder R"" miteinander unter Bildung eines Ringes verbunden sind.

Die erfindungsgemässen Mehrkomponentensysteme zeigen eine unerwartet gute Stabilität gegen Sauerstoff und gegen Alterung. Die Ursachen dafür sind nicht geklärt. Die Alterungsbeständigkeit kann beispielsweise in einer Additionsverbindung von Katalysator und Aktivator vermutet werden, während als Schutz gegen Sauerstoff und Feuchtigkeit auch hydrophobe Reste in Aktivator oder Grundkomponente a) verantwortlich sein könnten.

Die Vertreter der Komponente a) sind ausgewählt aus der Gruppe Butyro- und Valerolactam, alkylierte Lactame, wobei der Rest linear oder cyclisch sein kann und insbesondere 1-8 C-Atome enthält, N-linear und N-cyclisch alkylierte Harnstoffe, Carbonsäureester, Polyether-ester mit Molekulargewichten (Mn) zwischen 250 und 2000 und Ethylenoxid-, Butylenoxid- und Propylenoxid-Struktur, sterisch gehinderte Phenole, Ester des Phosphors, N-alkylierte Amine und Alkyl-oxazoline und Verbindungen ähnlicher, Heterogruppen enthaltender Ringstruktur.

Bevorzugte Verbindungen der Komponente a) sind solche mit benachbarten, d.h. orthoständigen Carbonsäureestergruppen, sterisch gehinderte Phenole, Phenolester und sterisch gehinderte Phenolester.
Weitere Verbindungen sind längerkettige Triester des Phosphors, wie z.B. Trisnonylphenylphosphit, oder die Lactame der Gruppe Butyro- und Valerolactam und N-alkylierte Lactame ausgewählt aus der Gruppe der N-alkylierten Derivative von Butyro-, Valero-, Capro-, Önantho- und Laurinlactam, besonders N-alkylierte C5 und C6 Lactame wie N-Methyl-caprolactam und insbesondere, N-Alkylpyrrolidon, wie N-Methyl- und N-Octylpyrrolidon.
Weitere Verbindungen sind N,N'-dialkylierte Harnstoffe, z.B. Tetramethyl- und Tetrabutylharnstoff, und die cyclischen Harnstoffe N,N'-Dimethylethylen- und N,N'-Dimethylpropylenharnstoff.
Im übrigen eignen sich besonders Ester der Phthalsäure, Oxalsäure, Adipinsäure, Malonsäure, Bernsteinsäure, Maleinsäure mit C1- bis C18-Alkoholen, wobei Alkohole mit 1 bis 8 C-Atomen bevorzugt sind, und die Alkohole wahlweise Doppelbindungen, Seitenketten oder Heteroatome enthalten sowie der vollständig veresterten und acylierten Hydroxisäuren, z.B. von Citronensäure, wobei der vom Alkohol stammende Rest auch der 2-Ethylhexylrest sein kann. Besonders eignen sich die Carbonsäureester mit kurzkettigen Alkoholkomponenten aus der Gruppe Alkohole mit 1 bis 8 C-Atomen und Polyole, z.B. Ethylenglykol, Diethylenglykol oder Glycerin.
Ferner eignen sich Polyetherester aus linearen Dicarbonsäuren bis zu 18 C-Atomen und Polyetherglykolen mit Molekulargewichten (Mn) zwischen 250 und 2000.
Weitere Verbindungen sind sterisch gehinderte und insbesondere N-dialkylierte Amine und Diamine, insbesondere Polyamine in denen die Aminogruppen über einen kurzkettigen Alkylrest getrennt sind sowie solche, mit einem Fettalkylrest.
Weitere Verbindungen sind Ester aus Säuren des Phosphor mit alkylierten Phenolen, langkettigen Alkoholen und deren Gemischen.
Weitere Verbindungen sind Alkyl-Oxazoline, mit mindestens 6 C Atomen im Alkylrest, der auch Heteroatome oder Heterogruppen enthalten kann, insbesondere Fettalkyloxazoline.

Die solvatisierende Grundkomponente bewirkt im erfindungsgemässen Mehrkomponentensystem eine genügend niedrige Viskosität, die die homogene Verteilung des Systems im Lactam ermöglicht.
Ein Vergleich zeigt leicht, dass Vertreter der Komponente a) ausser der zwingend geforderten Solvatisierung unerwarteterweise oft Zusatzaufgaben im Mehrkomponentensystem übernehmen. So wirken sie z.B. als Entformungsmittel und schirmen das System gegen Feuchtigkeitszutritt ab, wenn sie eine längere Alkankette als Rest R, z.B. am N-Atom, der CONR-oder der Estergruppe oder auch am Ester des Phosphors besitzen. Beispiele, mit je dem C8-C18-Alkylrest, sind Fettalkyloxazolin, Phthalsäureester, Alkylpyrrolidon, Trisnonylphenylphosphit, ferner Polyamine mit einem von natürlichen Fetten abgeleiteten Fettalkylrest und je dem N-Atome über eine -CH₂-CH₂- oder -CH₂-CH₂-CH₂- Brücke verbunden.

Ferner können sie das Fertigprodukt für den Langzeiteinsatz stabilisieren. Beispiele dafür sind Moleküle mit HALS-Struktur als Lichtstabilisator, Moleküle mit sterisch gehinderter Phenolstruktur als Hitzestabilisator und reduzierende, phenolische Phosphorsäureester als 'Fänger' für Restsauerstoff.

Viele dieser Molekülstrukturen können zudem eine weichmachende und/oder zähigkeitserhöhende Funktion ausüben. Beispiels dafür sind z.B. die N-substituierten Amide, Phthalsäure-ester und andere Esterverbindungen wie Polyätherester und Ester des Phosphors.

Weil die Moleküle der Gruppe a) ausser ihrer Funktion als Solvatisierungsmittel viele Zusatzfunktionen im Polylactamsystem übernehmen können, sind Mischungen solcher Moleküle für viele Anwendungen von grosser Bedeutung.

Eine Grundaufgabe im System übernehmen aber Solvatisierungsmoleküle die ein System von guter Fliessfähigkeit bewirken, sodass es gut und leicht in der Lactamschmelze verteilt werden kann und ergänzend die Moleküle manigfache Zusatzaufgaben übernehmen können.
Die Katalysatoren b) sind bevorzugt Alkali-, Erdalkali- oder Tetraalkylammonium-Lactamate oder deren Mischungen.
Die Aktivatoren c) sind ausgewählt aus der Gruppe mit Lactam oder Hydroxyfettalkyloxazolin verkappte Isocyanate, Diisocyanate und Polyisocyanate, Carbodiimide und Polycarbodiimide.
Als verwendungsbedingte Zusätze d) werden vorteilhaft Entformungsmittel, Stabilisatoren, Färbemittel, Markierungsmittel und Weichmacher eingesetzt.
Mögliche Zusätze d), die den Polymerisationsverlauf und die Molekulargewichtsverteilung beeinflussen, sind z.B. Alkohole, Polyalkohole und Polyätherpolyole, Amine und Phenole.

Die Erfindung beinhaltet auch die Verwendung des erfindungsgemässen flüssigen Mehrkomponentensystems zur Herstellung von Formkörpern, *die auch Verbundwerkstoffe sein können,* aus Polylactamen nach dem Verfahren der anionischen Lactampolymerisation.
Dabei wird das Mehrkomponentensystem in Gewichtsanteilen von 0,5 bis 15 %, bezogen auf das Lactam, eingesetzt.

Eine bevorzugte Variante ist, die Verwendung in diskontinuierlichen Verfahren.

In kontinuierlichen Verfahrensvarianten werden vorteilhaft Doppelwellenextruder verwendet.
Bei Verwendung zur Herstellung von Verbundwerkstoffen ist der Pultrusionsprozess bevorzugt.

Bevorzugte Polylactame sind Polycaprolactam, Polyönantholactam, Polylauirinlactam und ihre Gemische.

Besonders empfehlenswert ist die Verwendung des erfindungsgemässen Mehrkomponentensystems für die Herstellung von Verbundwerkstoffen mit einer Polylactammatrix, welche verstärkende Fasergebilde enthält oder von verstärkten oder unverstärkten Rohren, Profilen, Platten, granulierbaren Strängen, Hohlkörpern oder Gusskörpern. In bevorzugter Weise sind die verwendeten Verstärkungsfasern orientierte Fasern. Besonders vorteilhaft ist der hohe Volumenanteil, in dem die Verstärkungsfasern verwendet werden können. Die bevorzugt hergestellten verstärktenGranulate lassen sich in thermoplastischen Umformungsprozessen zu Formkörpern verarbeiten.

In einer weiteren bevorzugten Verwendungsvariante wird einem Vorratsbehälter reines, wasserfreies Lactam entnommen und einer Mischvorrichtung zugeführt. Dort wird das Mehrkomponentensystem, bevorzugt in einem Anteil von 0.5 bis 15 Gew.%, zugefügt und homogen in der Schmelze verteilt. Nun wird die aktivierte Lactamschmelze unter Wärmeeinwirkung einem Formgebungsprozess unterworfen. In speziellen Varianten werden der Schmelze zur Erhöhung der Formstabilität und zur Verminderung des Schwundes getrocknete Füll- und Verstärkungsstoffe, auch in Kombination mit Mitteln, die die Sedimentation verhindern, zugegeben.
Bei jeder Verwendung wird der Polymerisationsverlauf durch die Anteile an Katalysator und Aktivator, den Anteil an zugefügtem Mehrkomponentensystem und die Temperaturführung den Erfordernissen angepasst.
Insbesondere bei Lactam-12 ist es von Vorteil, die Temperatur der Schmelze auf 200 bis 300°C anzuheben und damit die Polymerisation stark zu beschleunigen, so dass sie z.B. in 60 bis 300 Sekunden abläuft, ohne dass ein hoher Anteil an Restlactam resultiert.

Bei der Verwendung im kontinuierlichen Verfahrensablauf wird das Mehrkomponentensystem kontinuierlich einer wasserfreien Lactamschmelze zugefügt, mit dieser homogen vermischt und das Gemisch mit Hilfe von geeigneten Förderelementen kontinuierlich gefördert und dabei durch gezielte Wahl der Anteilmenge des Mehrkomponentensystems, der Temperaturführung und der Verweilzeit so weit polymerisiert, dass der Schmelzestrom direkt der Formgebung zugeführt oder in Strangform nach Kühlung granuliert werden kann.
Als Förderelemente eignen sich Doppelwelllenextruder, die vielfältige Modifikationsmöglichkeiten des Verfahrens erlauben.

Bevorzugt werden beispielsweise insbesondere der schon weitgehend polymerisierten Schmelze flüssige und/oder feste Zusätze kontinuierlich zugefügt.
Geeignete Zusätze sind z.B. Weichmacher, etwa des Ester-oder Polyether-Typs oder auch für Polyamide übliche Sulfonamid-Weichmacher, ferner Glasfasern, Mineralien, Antiflammittel und Fremdpolymere, die z.B. die Schlagzähigkeit verbessern, sowie Verarbeitungshilfsmittel und Stabilisatoren, wie sie für Polyamide üblich sind.
Diese Zusatzstoffe und Additive können in beliebiger Kombination eingesetzt werden, insbesondere wenn sie nach weitgehend erfolgter Polymerisation zugefügt werden.

In einer weiteren bevorzugten Variante werden Gussformen mit der aktivierten Lactamschmelze gefüllt, und die Gussteile langsam bei Temperaturen unterhalb des Polylactamschmelzpunktes auspolymerisiert.
Bei Polycaprolactam entstehen dabei spannungsfreie Teile mit niederem Restlactamgehalt.
Solche Gussteile besitzen ein hervorragendes Eigenschaftsprofil. Sie sind zäh, abriebbeständig und schlagfest.
Zur Erhöhung der Steifigkeit und des Schwundes werden bevorzugt gut getrocknete Füll- und Verstärkungsstoffe, wie z.B. Glasfasern und Mineralien mitverwendet.

Die aktivierte Schmelze wird auch in Varianten für das Rotationsgussverfahren verwendet, wobei Hohlkörper von hoher Bruchfestigkeit und guten Sperreigenschaften, insbesondere gegen Treibstoffe, Fette und Öle resultieren.

Das erfindungsgemässe Mehrkomponentensystem wird vorteilhaft für die kontinuierliche oder diskontinuierliche Herstellung von Verbundwerkstoffen verwendet.

Von besonderem Vorteil ist dabei, dass die durch das Mehrkomponentensystem frisch aktivierte, noch dünnflüssige Lactamschmelze vorgebildete Filamentstrukturen, wie Gewebe, Gewirke, Gestricke, Gesticke und Rowing-Anordnungen vollständig durchdringt und benetzt, wonach sie unter Wärmeeinwirkung polymerisiert und eine Matrix von hoher Bruchfestigkeit bildet, die thermisch nachverformbar ist.

Die Filamentgebilde müssen trocken sein und dürfen keine polymerisationshemmenden Oberflächenstrukturen besitzen.

Die Verwendungen umschliessen das Resin-Transfer-Molding-Verfahren, die Pultrusion, die Imprägnation von flachen Fasergebilden zu Platten und die Verwendung für langfaserhaltige Granulate.
Die Filamentstrukturen sind bevorzugt solche aus E-Glas- oder Kohlenstoff-Fasern.

### Beispiele 1 bis 11

Die Beispiele 1 bis 11 beschreiben die Herstellung von Flüssigsystemen.
Zur Herstellung des Flüssigsystems ist Arbeiten unter Schutzgas-Atmosphäre notwendig.
In einem Gefäss mit Innentemperaturmessung wird die Komponente a) vorgelegt und auf 30 bis maximal 70 °C erwärmt.
Danach wird unter Rühren die Komponente c) eingetragen und homogen eingemischt. Nach entstehen einer klaren Lösung werden unter Kontrolle der Temperatur, welche 70 °C nicht überschreiten darf, die Komponente b) und anschliessend gegebenenfalls die Additive d) zugegeben.
Die resultierenden Lösungen sind bei Raumtemperatur flüssig und lagerstabil.

**Tabelle 1:**

| **FLÜSSIGE MEHRKOMPONENTENSYSTEME** | | | | | | | |
|---|---|---|---|---|---|---|---|
| No | Komponente a) | Teile a) | Komponente b) | Teile b) | Komponente c) | Teile c) | Bemerkung |
| 1 | N-Methyl-Caprolactam | 50 | Na-CL | 25 | CD | 25 | gelbe, klare Flüssigkeit |
| 2 | Irganox 1135 CL d) | 60 10 | Na-CL | 15 | CL-MDI | 15 | gelbe, klare Flüssigkeit zähfliessend |
| 3 | TNPP | 62 | Na-CL | 19 | CD | 19 | gelbe, klare Flüssigkeit zähfliessend |
| 4 | BBSA DMPU | 10 50 | Na-CL | 20 | CD | 20 | gelbe, klare Flüssigkeit |
| 5 | TPM | 50 | Na-CL | 25 | Bis-Ox | 25 | gelbe, klare Flüssigkeit |
| 6 | TPM | 50 | Na-CL | 25 | CL-IDI | 25 | gelbe, klare Flüssigkeit |
| 7 | TPM | 50 | Na-CL | 25 | PCD | 25 | gelbe, klare Flüssigkeit |
| 8 | DMSO | 50 | Na-CL | 25 | CD | 25 | gelbe, klare Flüssigkeit |
| 9 | Polyethylenglycoldimethyl ether MG 250 | 50 | Na-CL | 25 | CD | 25 | gelbe, klare Flüssigkeit |
| 10 | Phthalsäurediethylester | 50 | Na-CL | 25 | CD | 25 | |
| 11 | Aminopropylpolytetrahydrofuran 750 CL d) | 60 10 | Na-CL | 15 | CL-MDI | 15 | gelbe, klare Flüssigkeit bis 20°C flüssig |
| NMP: N-Methyl-2-Pyrrolidon Irganox 1135: Phenolisches Antioxidant, Irganox 1135®, CIBA-GEIGY AG, Basel (CH) TNPP: Trinonylphenylphosphit, Irganox TNPP®, CIBA-GEIGY AG, Basel (CH) BBSA: Butylbenzolsulfonamid, Della Toll®, Bayer AG DMPU: N,N'-Dimethylpropylenharnstoff TMP: Tripropylenglycolmethylether, Dowanol TPM®, DOW AG, Horgen (CH) DMSO: Dimethylsulfoxid Na-CL: Narium-Caprolactamat, ca 3-5% Natrium, Pacast AG, Sangans (CH) CD: Substituiertes Diarylcarbodiimid, Stabaxol I(R), Rhein Chemie GmbH, Mannheim (D) CD-MDI: Caprolactamverkapptes-Methylendiisocyanat, Grilbond IL6, EMS-CHEMIE AG, Domat/Ems (CH) Bis-Ox: Ricinyl-bisoxazolin, Loxamid 8523 (R), Henkel KG, Düsseldorf ( BRD ) CL-IDI: Caprolactamverkapptes Isosphorondiisocyanat, Crelan UI®, Bayer AG PCD: Polycarbodiimid, Stabaxol P, Rheinchemie AG | | | | | | | |

### Beispiele 11 bis 22

Zur Verwendung der Flüssigsysteme zur Durchführung der aktivierten anionischen Lactampoly-merisation kann nach folgender allgemeinen Vorschrift verfahren werden. In einem Gefäss mit Innenthermometer wird unter Stickstoff-Atmosphäre eine LactamSchmelze vorgelegt und unter kontrollierter Temperatur und Rühren das Flüssigsystem eingetragen.
Als Vergleichszeit t, um den Ablauf der Polymerisation zu beschreiben, wird die Zeitspanne bis zum Unrührbarwerden der Schmelze verwendet.
Anschliessend wird die Schmelze 60 min bei 175°C auspolymerisiert.

**Tabelle 2**

| **VERWENDUNG DER MEHRKOMPONENTENSYSTEME** DER BEISPIELE 1 BIS 11 ZUR LACTAMPOLYMERSATION | | | | | | | | |
|---|---|---|---|---|---|---|---|---|
| **No** | **Lactam** | **Teile** | **System gemäss** | **Teile** | **Schmelzetemperatur** | **Vergl.Zeit t** | **DSC-Smp Polymer** | **Bemerkung** |
| **1** | Laurinlactam | 100 | Beispiel **1** | 3 | 175 °C | 200 sec | 171 °C | |
| **2** | Laurinlactam | 100 | Beispiel **2** | 4 | 175 °C | 100 sec | 170 °C | |
| **3** | Laurinlactam | 100 | Beispiel **3** | 5 | 162 °C | 270 sec | 172 °C | |
| **4** | Laurinlactam | 100 | Beispiel **4** | 3 | 162 °C | 210 sec | 170 °C | Kettenregelung durch BBSA |
| **5** | Laurinlactam | 100 | Beispiel **5** | 3 | 162 °C | 30 sec | 173 °C | |
| **6** | Laurinlactam | 100 | Beispiel **6** | 3 | 175 °C | 70 sec | 170 °C | |
| **7** | Laurinlactam | 100 | Beispiel **7** | 3 | 175 °C | 200 sec | 170 °C | |
| **8** | Laurinlactam | 100 | Beispiel **8** | 4 | 175 °C | 190 sec | 170 °C | |
| **9** | CaprolactCL | 100 | Beispiel **9** | 5 | 150 °C | 240 sec | 211 °C | |
| **10** | Laurinlactam | 100 | Beispiel **10** | 4 | 175 °C | 200 sec | 171 °C | |
| **11** | Laurinlactam | 100 | Beispiel **11** | 4 | 175 °C | 70 sec | 172 °C | |

## Patentansprüche

1. Bei Raumtemperatur flüssiges Mehrkomponentensystem für die anionische Lactampolymerisation bestehend aus dem Umsetzungsprodukt von
a) 30 bis 80 Gew.-Teilen mindestens einer solvatisierend wirkenden Komponente,
b) 5 bis 40 Gew.-Teilen mindestens eines Lactamats,
c) 5 bis 40 Gew.-Teilen mindestens eines Aktivators welche sich auf 100 Teile ergänzen und gegebenenfalls
d) 0 bis 50 Gew.-Teilen an Zusätzen
wobei die Komponente a) eine aliphatische, cycloaliphatische und/oder aromatische Kohlenwasserstoffverbindung mit Heteroatomen oder Heterogruppen als solvatisierend wirkende Strukturelemente aus der Gruppe -CONR- , R'R"N- CO- OR"", - NO-, -O-, RR'NCONR"R"', phenolisches - OH, - S-, - SO-, - SO2, - NRR', P(- OR)3, PO(- OR)3, - CO- und - COOR, in denen R, R', R", R"' und R"" gleiche oder unterschiedliche Reste mit mindestens einem C- Atom sind, wobei das phenolische OH soweit sterisch abgeschirmt ist, dass es keine Kondensationsreaktion mehr eingehen kann, oder ein Molekül mit HALS- Struktur, Butyro- oder Valerolactam ist.

2. Mehrkomponentensystem nach Anspruch 1,
dadurch gekennzeichnet, dass
komponnente a) ausgewählt ist aus der Gruppe Säureamide, alkylierte Lactame, N,N'-dialkylierte Harnstoffe, die *auch cyclisch sein können,* Carbonsäureester, Polyetherester mit Molekulargewichten (Mn) zwischen 250 und 2000 und Ethylenoxid-, Propylenoxid- und Butylenoxid-Segmenten oder den entsprechenden Co- oder Blockcopolymeren, sterisch gehinderte Phenole, Ester von Säuren des Phosphors, N-alkylierte Amine oder Polyamine, N-dialkylierte Carbaminsäureester, Dimethylsulfoxid und Alkyloxazoline.

3. Mehrkomponentensystem nach Anspruch 1 oder 2,
dadurch gekennzeichnet, dass
die Komponente a) mehrere solvatisierend wirkende Strukturelemente enthält.

4. Mehrkomponentensystem nach einem der Ansprüche 1 bis 3,
dadurch gekennzeichnet, dass
die Carbonsäureester Estergruppen aufweisen, die benachbart zueinander stehen.

5. Mehrkomponentensystem nach einem der vorhergehenden Ansprüche,
dadurch gekennzeichnet, dass
die N-alkylierten Lactame ausgewählt sind aus der Gruppe der N-alkylierten Derivate von Butyrolactam, Valerolactam, Caprolactam, Önantholactam und Laurinlactam.

6. Mehrkomponentensystem nach Anspruch 5,
dadurch gekennzeichnet, dass
die N-alkylierten Lactame ausgewählt sind aus der Gruppe N-alkyliertes Lactam 5 und N-alkyliertes Lactam 6.

7. Mehrkomponentensystem nach einem der vorhergehenden Ansprüche,
dadurch gekennzeichnet, dass
die N,N'-alkylierten Harnstoffe Tetramethylharnstoff und Tetrabutylharnstoff sind.

8. Mehrkomponentensystem nach einem der vorhergehenden Ansprüche,
dadurch gekennzeichnet, dass
die cyclischen Harnstoffe N,N'-Dimethylethylenharnstoff und N,N'-Dimethylpropylenharnstoff sind.

9. Mehrkomponentensystem nach einem der vorhergehenden Ansprüche,
dadurch gekennzeichnet, dass
die Carbonsäureester solche der Phthalsäure, Oxalsäure, Adipinsäure, Malonsäure, Bernsteinsäure oder Maleinsäure mit Alkoholen mit 1 bis 18 C-Atomen, welche gegebenenfalls Doppelbindungen und Heteroatome enthalten, oder vollständig veresterte und acylierte Hydroxysäuren sind.

10. Mehrkomponentensystem nach einem der vorhergehenden Ansprüche,
dadurch gekennzeichnet, dass
die Carbonsäureester von kurzkettigen Alkoholkomponenten aus der Gruppe Alkohole mit 1 bis 8 C-Atomen, Ethylenglykol, Diethylenglykol und Glycerin abgeleitet sind.

11. Mehrkomponentensystem nach einem der vorhergehenden Ansprüche,
dadurch gekennzeichnet, dass
die Polyetherester von linearen Dicarbonsäuren mit 1 bis 18 C-Atomen abgeleitet sind.

12. Mehrkomponentensysteme nach einem der vorhergehenden Ansprüche.
dadurch gekennzeichnet, dass
die Ester der Säuren des Phosphors solche mit alkylierten Phenolen, langkettigen Alkoholen oder deren Gemischen sind.

13. Mehrkomponentensystem nach einem der vorhergehenden Ansprüche,
dadurch gekennzeichnet, dass
die Alkyloxazoline einen Alkyl-Substituenten mit mindestens 6 C-Atomen mit oder ohne Heteroatomen oder Heterogruppen besitzen.

14. Mehrkomponentensystem nach einem der vorhergehenden Ansprüche,
dadurch gekennzeichnet, dass
das Lactamat ein Alkali-, Erdalkali oder Tetraalkylammonium Lactamat oder deren Mischung ist.

15. Mehrkomponentensystem nach einem der vorhergehenden Ansprüche,
dadurch gekennzeichnet, dass
der Aktivator c) ausgewählt ist aus der Gruppe mit Lactam oder Hydroxyfettalkyl-Oxazolin verkappte Isocyanate, Diisocyanate und Polyisocyanate, Carbodiimide und Polycarbodiimide.

16. Mehrkomponentensysteme nach einem der vorhergehenden Ansprüche,
dadurch gekennzeichnet, dass sie ein Additiv d) ausgewählt aus der Gruppe Entformungsmittel, Stabilisatoren, Färbemittel, Markierungsmittel und Weichmacher, enthalten.

17. Verwendung des flüssigen Mehrkomponentensystems nach einem der Ansprüche **1** bis **16** zur Herstellung von Formkörpern aus Polylactam nach dem Verfahren der aktivierten anionischen Lactampolymerisation.

18. Verwendung nach Anspruch **17**,
dadurch gekennzeichnet, dass
das Polylactam Polycaprolactam, Polyönantholactam, Polylaurinlactam oder deren Gemisch ist.

19. Verwendung nach Anspruch **17** oder **18**,
dadurch gekennzeichnet, dass
das Verfahren diskontinuierlich durchgeführt wird.

20. Verwendung nach Anspruch **17** oder **18**,
dadurch gekennzeichnet, dass
das Verfahren kontinuierlich auf einem Doppelwellenextruder oder bei Verbundwerkstoffen nach dem Pultrutionsprozess durchgeführt wird.

21. Verwendung nach einem der Ansprüche **17** bis **20**,
dadurch gekennzeichnet dass
die Formkörper Verbundwerkstoffe aus einem Verstärkungsfaser-Gebilde und einer Matrix aus Polylactam sind.

22. Verwendung nach einem der Ansprüche **17** bis **20,**
dadurch gekennzeichnet, dass
die Formkörper Rohre, Profile, Platten, Monofilamente, Granulate, Hohlkörper oder Gusskörper mit oder ohne Verstärkungsfasergebilde sind.

## Claims

1. Multi-component system which is liquid at room temperature, for anionic lactam polymerisation, consisting of the reaction product of
a) 30 to 80 parts by wt. of at least one component with a solvating action,
b) 5 to 40 parts by wt. of at least one lactamate,
c) 5 to 40 parts by wt. of at least one activator, which add up to 100 parts, plus if appropriate
d) 0 to 50 parts by wt. of additives,
where component a) is an aliphatic, cycloaliphatic and/or aromatic hydrocarbon compound with heteroatoms or heterogroups as structural elements with a solvating action taken from the group comprising -CONR-, R'R"N-CO-OR"", -NO-, -O-, RR'NCONR"R"', phenolic -OH, -S-, -SO-, -SO2, -NRR', P(-OR)3, PO(OR)3, -CO- and -COOR, in which R, R', R", R"' and R"" are identical or different radicals having at least one carbon atom, where the phenolic OH is sterically screened to the extent that it can no longer take part in a condensation reaction, or is a molecule with HALS structure, butyrolactam or valerolactam.

2. Multi-component system according to claim 1,
characterised in that component a) is selected from the group comprising acid amides, alkylated lactams, N,N'-dialkylated ureas, which may also be cyclic, carboxylic acid esters, polyether esters with molecular weights (Mn) of between 250 and 2000, and ethylene oxide, propylene oxide and butylene oxide segments or the corresponding copolymers or block copolymers, sterically hindered phenols, esters of acids of phosphorus, N-alkylated amines or polyamines, N-dialkylated carbamic acid esters, dimethyl sulphoxide and alkyl oxazolines.

3. Multi-component system according to claim 1 or 2, characterised in that component a) contains a plurality of structural elements with a solvating action.

4. Multi-component system according to any of claims 1 to 3,
characterised in that the carboxylic acid esters have ester groups that are sited adjacent to one another.

5. Multi-component system according to any of the preceding claims,
characterised in that the N-alkylated lactams are selected from the group comprising N-alkylated derivatives of butyrolactam, valerolactam, caprolactam, enantholactam and laurinlactam.

6. Multi-component system according to claim 5,
characterised in that the N-alkylated lactams are selected from the group comprising N-alkylated lactam 5 and N-alkylated lactam 6.

7. Multi-component system according to any of the preceding claims,
characterised in that the N,N'-alkylated ureas are tetramethyl urea and tetrabutyl urea.

8. Multi-component system according to any of the preceding claims,
characterised in that the cycylic ureas are N,N'-dimethyl ethylene urea and N,N'-dimethyl propylene urea.

9. Multi-component system according to any of the preceding claims,
characterised in that the carboxylic acid esters are those of phthalic acid, oxalic acid, adipic acid, malonic acid, succinic acid or maleic acid with alcohols having 1 to 18 carbon atoms, containing double bonds and heteroatoms if appropriate, or fully esterified and acylated hydroxy acids.

10. Multi-component system according to any of the preceding claims,
characterised in that the carboxylic acid esters are derived from short-chain alcohol components taken from the group comprising alcohols with 1 to 8 carbon atoms, ethylene glycol, diethethylene glycol and glycerin.

11. Multi-component system according to any of the preceding claims,
characterised in that the polyether esters are derived from linear dicarboxylic acids having 1 to 18 carbon atoms.

12. Multi-component system according to any of the preceding claims,
characterised in that the esters of the acids of phosphorus are those having alkylated phenols, longchain alcohols or mixtures thereof.

13. Multi-component system according to any of the preceding claims,
characterised in that the alkyl oxazolines possess an alkyl substituent having at least 6 carbon atoms with or without heteroatoms or heterogroups.

14. Multi-component system according to any of the preceding claims,
characterised in that the lactamate is an alkali lactamate, alkaline earth lactamate or tetra-alkyl ammonium lactamate or mixture thereof.

15. Multi-component system according to any of the preceding claims,
characterised in that the activator c) is selected from the group comprising isocyanates, diisocyanates and polyisocyanates capped with lactam or hydroxy aliphatic alkyl oxazoline, carbodiimides and polycarbodiimides.

16. Multi-component systems according to any of the preceding claims,
characterised in that they contain an additive d) selected from the group comprising demoulding agents, stabilisers, colouring agents, marking agents and softeners.

17. Use of the liquid multi-component system according to any of claims 1 to 16 for producing moulded parts from polylactam by the activated anionic lactam polymerisation method.

18. Use according to claim 17,
characterised in that the polylactam is polycaprolactam, polyenantholactam, polylaurinlactam or a mixture thereof.

19. Use according to claim 17 or 18,
characterised in that the process is carried out discontinuously.

20. Use according to claim 17 or 18,
characterised in that the process is carried out continuously on a twin-screw extruder or using the pultrution process in the case of composites.

21. Use according to any of claims 17 to 20,
characterised in that the moulded parts are composites of a reinforcing fibre structure and a matrix of polylactam.

22. Use according to any of claims 17 to 20,
characterised in that the moulded parts are pipes, profiles, sheets, monofilaments, pellets, blow moulded parts or cast parts with or without reinforcing fibre structures.

## Revendications

1. Système à plusieurs composants, liquide à la température ambiante, pour la polymérisation anionique de lactames, constitué du produit de réaction de
a) 30 à 80 parties en poids d'au moins un composant à action de solvatation,
b) 5 à 40 parties en poids d'au moins un lactamate,
c) 5 à 40 parties en poids d'au moins un activateur, qui forment au total 100 parties en poids, et éventuellement
d) 0 à 50 parties en poids d'additifs,
le composant a) étant un composé hydrocarboné aliphatique, cycloaliphatique et/ou aromatique comportant des hétéroatomes ou des hétérogroupes, en tant qu'élément à action de solvatation choisi dans l'ensemble constitué par les groupes -CONR-, R'R"N-CO-OR"", -NO-, -O-, RR'NCONR"R", -OH phénolique, -S-, -SO-, -SO₂, NRR', P(-OR)₃, PO(-OR)₃, -CO- et -COOR, dans lesquels R, R', R", R"'et R"" sont des radicaux identiques ou différents comportant au moins un atome de carbone, le groupe OH phénolique ayant suffisamment d'empêchement stérique pour ne plus pouvoir donner naissance à une réaction de condensation, ou une molécule à structure de HALS (photostabilisant de type amine à empêchement stérique), le butyrolactame ou le valéro-lactame.

2. Système à plusieurs composants selon la revendication 1, caractérisé en ce que le composant a) est choisi dans le groupe constitué par des amides, lactames alkylés, urées N,N'-dialkylées, qui *peuvent également être cycliques,* esters d'acides carboxyliques, polyétheresters à masses moléculaires (Mₙ) comprises entre 250 et 2 000 et des segments d'oxyde d'éthylène, oxyde de propylène et oxyde de butylène ou les copolymères ou polymères séquencés correspondants, des phénols à empêchement stérique, des esters d'acides du phosphore, des amines ou polyamines N-alkylées, des esters d'acide carbamique N-dialkylés, le diméthylsulfoxyde et des alkyloxazolidines.

3. Système à plusieurs composants selon la revendication 1 ou 2, caractérisé en ce que le composant a) contient plusieurs éléments structuraux à action de solvatation.

4. Système à plusieurs composants selon l'une des revendications 1 à 3, caractérisé en ce que les esters d'acides carboxyliques comportent des groupes ester qui sont voisins les uns des autres.

5. Système à plusieurs composants selon l'une des revendications précédentes, caractérisé en ce que les lactames N-alkylés sont choisis dans le groupe constitué par des dérivés N-alkylés du butyrolactame, valérolactame, caprolactame, oenantholactame et laurolactame.

6. Système à plusieurs composants selon la revendication 5, caractérisé en ce que les lactames N-alkylés sont choisis parmi un lactame 5 N-alkylé et un lactame 6 N-alkylé.

7. Système à plusieurs composants selon l'une des revendications précédentes, caractérisé en ce que les urées N,N'-alkylées sont la tétraméthylurée et la tétrabutylurée.

8. Système à plusieurs composants selon l'une des revendications précédentes, caractérisé en ce que les urées cycliques sont la N,N'-diméthyléthylène-urée et la N,N'-diméthylpropylène-urée.

9. Système à plusieurs composants selon l'une des revendications précédentes, caractérisé en ce que les esters d'acides carboxyliques sont ceux de l'acide phtalique, oxalique, adipique, malonique, succinique ou maléique avec des alcools ayant de 1 à 18 atomes de carbone, qui contiennent éventuellement des doubles liaisons et des hétéroatomes, ou sont des hydroxy-acides totalement estérifiés et acylés.

10. Système à plusieurs composants selon l'une des revendications précédentes, caractérisé en ce que les esters d'acides carboxyliques sont dérivés de composants alcool à courte chaîne choisis dans le groupe des alcools ayant de 1 à 8 atomes de carbone, l'éthylèneglycol, le diéthylèneglycol et le glycérol.

11. Système à plusieurs composants selon l'une des revendications précédentes, caractérisé en ce que les polyétheresters sont dérivés d'acides dicarboxyliques linéaires ayant de 1 à 18 atomes de carbone.

12. Système à plusieurs composants selon l'une des revendications précédentes, caractérisé en ce que les esters des acides du phosphore sont ceux avec des phénols alkylés, des alcools à longue chaîne ou des mélanges de ceux-ci.

13. Système à plusieurs composants selon l'une des revendications précédentes, caractérisé en ce que les alkyloxazolines comportent un substituant alkyle ayant au moins 6 atomes de carbone, avec ou sans hétéroatomes ou hétérogroupes.

14. Système à plusieurs composants selon l'une des revendications précédentes, caractérisé en ce que le lactamate est un lactamate alcalin, alcalino-terreux ou de tétraalkylammonium, ou un mélange de ceux-ci.

15. Système à plusieurs composants selon l'une des revendications précédentes, caractérisé en ce que l'activateur c) est choisi dans le groupe des isocyanates, diisocyanates et polyisocyanates coiffés avec un lactame ou une hydroxy-(alkyl gras)-oxazolidine, des carbodiimides et polycarbodiimides.

16. Systèmes à plusieurs composants selon l'une des revendications précédentes, caractérisé en ce qu'ils contiennent un additif d) choisi dans le groupe des agents de démoulage, stabilisants, colorants, agents de marquage et plastifiants.

17. Utilisation du système liquide à plusieurs composants selon l'une des revendications 1 à 16, pour la fabrication de corps moulés à base de polylactame selon le procédé de la polymérisation anionique activée de lactames.

18. Utilisation selon la revendication 17, caractérisée en ce que le polylactame est le polycaprolactame, le poly-oenantholactame, le polylaurolactame ou un mélange de ceux-ci.

19. Utilisation selon la revendication 17 ou 18, caractérisée en ce que le procédé est mis en oeuvre en mode discontinu.

20. Utilisation selon la revendication 17 ou 18, caractérisée en ce que le procédé est mis en oeuvre en continu sur une extrudeuse double vis ou, dans le cas de matériaux composites, selon le procédé de pultrusion.

21. Utilisation selon l'une des revendications 17 à 20, caractérisée en ce que les corps moulés sont des matériaux composites constitués d'un produit fibreux de renforcement et d'une matrice en polylactame.

22. Utilisation selon l'une des revendications 17 à 20, caractérisée en ce que les corps moulés sont des tubes, profilés, plaques, monofilaments, produits granulés, corps creux ou corps coulés, avec ou sans produit fibreux de renforcement.
